# EUROPEAN PATENT SPECIFICATION

(11) **EP 2 599 998 B1**
(45) Date of publication and mention of the grant of the patent: **27.04.2016**
(21) Application number: 12460011.5
(22) Date of filing: 28.03.2012
(51) Int. Cl.: F03D 9/00, F03D 5/06

(54) **Photovoltaic wing**
Photovoltaischer Flügel
Aile photovoltaïque

(30) Priority: 25.11.2011 PL 39712811
(43) Date of publication of application: 05.06.2013
(73) Proprietor: Wojtasik, Lech, 64-930 Dolaszewo (PL)
(72) Inventor: Wojtasik, Lech, 64-930 Dolaszewo (PL)
(74) Representative: Golebniak, Andrzej

(56) References cited:
- MX-A- 2009 012 637
- US-A1- 2009 224 553
- US-A1- 2011 030 361

## Description

The invention refers to photovoltaic wing intended to obtain electricity through the conversion of sunlight with simultaneous using wind energy.

Photovoltaic is the field of technology engaged in processing of sunlight into electrical energy, in other words - power generation from sunlight using photovoltaic phenomena.
The basic element used to convert solar energy into electricity by the photovoltaic effect is the photovoltaic cell. Single cell usually obtained 1 to 2 W, which is insufficient for most applications. To achieve higher voltages or currents cells are linked in series and/or in parallel to form photovoltaic modules.
Photovoltaic panel consists of several modules, mutually linked in order to obtain greater power. Further increase of power is obtained by linking the panels.
In practice there are three basic configurations of photovoltaic systems: stand-alone, hybrid and connected to the network. Stand-alone systems use the energy generated in photovoltaic cells only. Such a system basically consists of photovoltaic panel, battery and control devices. Hybrid systems are a combination of the photovoltaic panel with another energy generating system, for example in the form of combustion, gas or wind generator.
Systems connected to the network may consist of power plants with plenty of photovoltaic panels convey the energy to the mains, or supply the buildings attached to the network, where energy is taken from the mains only when demand for it exceeds production in photovoltaic cells.

There are various types of hybrid photovoltaic systems, applied to parallel processing of solar energy and wind energy into electrical energy. From the Mexican description of MX2009012637 (A) is known a self-supporting unit for power generation from solar, wind and mechanical energy. The device consists of a wind generator, photovoltaic generator and combustion generator, and electricity generated within them through the regulating system is accumulated in the battery.
A simple solution for simultaneous power generation from wind energy and solar energy was proposed in the German utility model DE202004010093 (U1). This solution consists of photovoltaic modules covering the lateral surface of wind turbine towers. Photovoltaic elements can be mounted as panels, either in the form of photovoltaic foil or photovoltaic paint.
Power generation system combining photovoltaic and wind power generating is the subject of international patent application WO 2004081376 (A1). According to this invention, a device for power generation in the first version consists of a basis, a photovoltaic panel deployed on a panel receiving table mounted on a vertical column, a wind turbine with a plurality of blades, ratatably mounted around a column and a generator for energy generation by converting rotational energy of a wind turbine into electricity.
The device of invention in the second version in place of wind turbine with blades and a table with photovoltaic panels, has a windmill with horizontal bearing. There are photovoltaic modules on the upper surface of the wings of that windmill.
From the Taiwan description of TW201100634(A) and its counterpart - the American description of US 2010/0320760 A1 is known a wind-solar power generator. This generator is powered by windmill with horizontal bearing, with a photovoltaic panels arranged on the wings from the windward site.
A similar solution was presented in the Japanese description of JP2011106298 (A) according to which the photovoltaic panels are arranged on the surface of wings of the windmill with horizontal axis. Known hybrid photovoltaic systems are based on parallel processing of solar energy and wind energy into electrical energy using for that purpose the mechanical energy derived from spinning motion of wind turbines or windmills with vertical or horizontal axis. In the latest solutions of these devices, photovoltaic panels are integrated with windmills by arrangement directly on the working surface of the wings of windmills, which may be called photovoltaic wings.
Efficiency and productivity of these devices depends on wingspan of the windmills, as well as the size of their surface with photovoltaic panels. Efficiency of the panels depends on their orientation relative to the light, and efficiency of the windmills depends on their setting relation to the direction of the wind. Both directions are rarely compatible. At the same time, the use of windmills for generating electricity is facing major resistance from environmentalists because of the risk to birds and a noise.
From the patent specification US 2009/02243553 A1 it is known the oscillating windmill which is provided with basically vertical mast provided in its upper part with the set of blades and the lower part is mounted in tilting way around the axis to the base. Inside the base the return mechanisms and power processing mechanisms are provided. Wind exerting on vertically positioned blades moves the mast which in result of inclining puts into operation the mechanism rotating the blades to the horizontal position, resulting the decreasing the wind thrust and mast returns to the initial position and the blades return to vertical position.

The aim of the present invention was to develop a photovoltaic panel, which could generate electricity from wind energy without non-environmentally friendly spinning motion.
The aim was reached in the present invention, according to which photovoltaic wing having surface form similar to rectangle-like form, covered with photovoltaic structure and utilizing harmonic pendulous movement caused by the wind. Photovoltaic wing has form of tilting wing inclined axially at 20° to 45°, preferably 30° to 35°, to the level which is connected with return mechanism and electric power generating mechanism, wherein wing in longitudinal section is in form similar to the wedge sinusoidal double-twisted in middle part and widening downwards, which lower widened part is mounted in tilting way on the base.
The lower, extended part of the pendulous wing preferably passes into form of horizontal cylinder.
Preferably, inside of the lower extended part is arranged the return mechanism and/or electricity generating mechanism.
That lower extended part may also be linked with the counterweight element.
Optionally, the return mechanism and/or electricity generating mechanism may be mounted on the external basis.
The return mechanism is preferably in the form of springy mechanism of known construction.
Preferably, a wing at its free end has a holes and/or a skeletal design provided with two longitudinal ribs and covering, which is sinusoidal double-twisted in the middle part, wherein between lower ends of ribs the cylinder is provided.
Photovoltaic structure, on the upper surface of the wing, is in the form of photovoltaic modules or photovoltaic foil or paints.
Photovoltaic wing of the invention is preferably made of high strength and low specific gravity materials.

Photovoltaic wing of the invention may be used in places where traditional forms of windmills would be difficult to accept. Harmonic motion caused by the wind, as opposed to the rotary-spinning motion, is widespread in nature.
This harmonic motion of the wing triggers the internal mechanism, which generate electricity and the return springy mechanism, which jointly with eventual counterweight part causes the return of the wing to the initial position. Photovoltaic wing assumes a position obliquely to the basis and towards enabling the optimal use of the solar energy. The double, sinusoidal wing twisting allows optimal use of wind regardless of its direction.
This allows the wing sets of the invention to be mounted on roofs without additional directional mechanism.

The invention is illustrated in the embodiments in the drawing, the next figures shows:

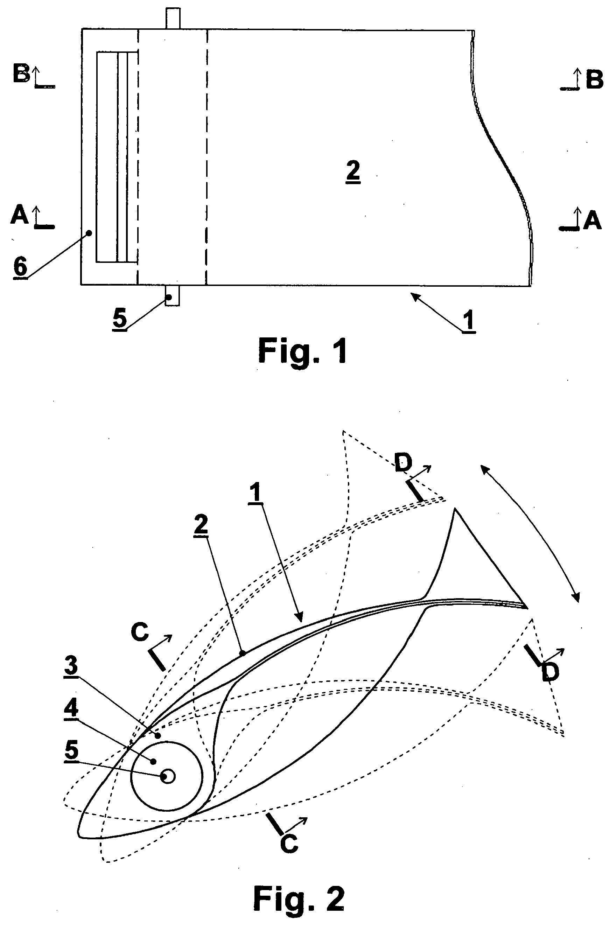

Fig. 1 - photovoltaic wing in the first embodiment in a top view;
Fig. 2 - photovoltaic wing in the first embodiment in a side view;

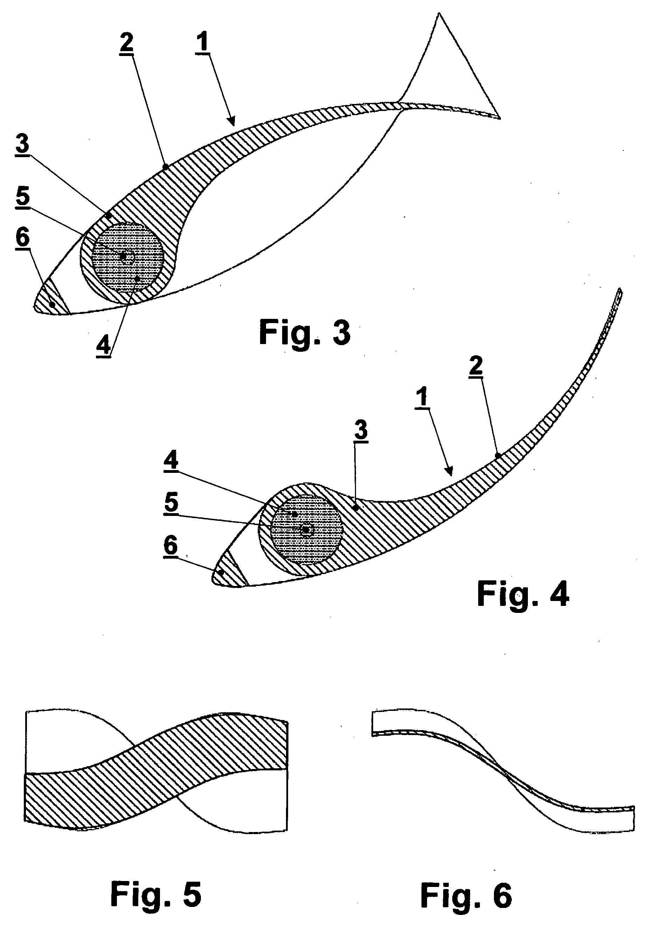

Fig. 3 - photovoltaic wing in the first embodiment in vertical section along line A-A on Fig. 1;
Fig. 4 - photovoltaic wing in the first embodiment in vertical section along line B-B on Fig. 1;
Fig. 5 - photovoltaic wing in the first embodiment in vertical section along line C-C on Fig. 2;
Fig. 6 - photovoltaic wing in the first embodiment in vertical section along line D-D on Fig. 2;

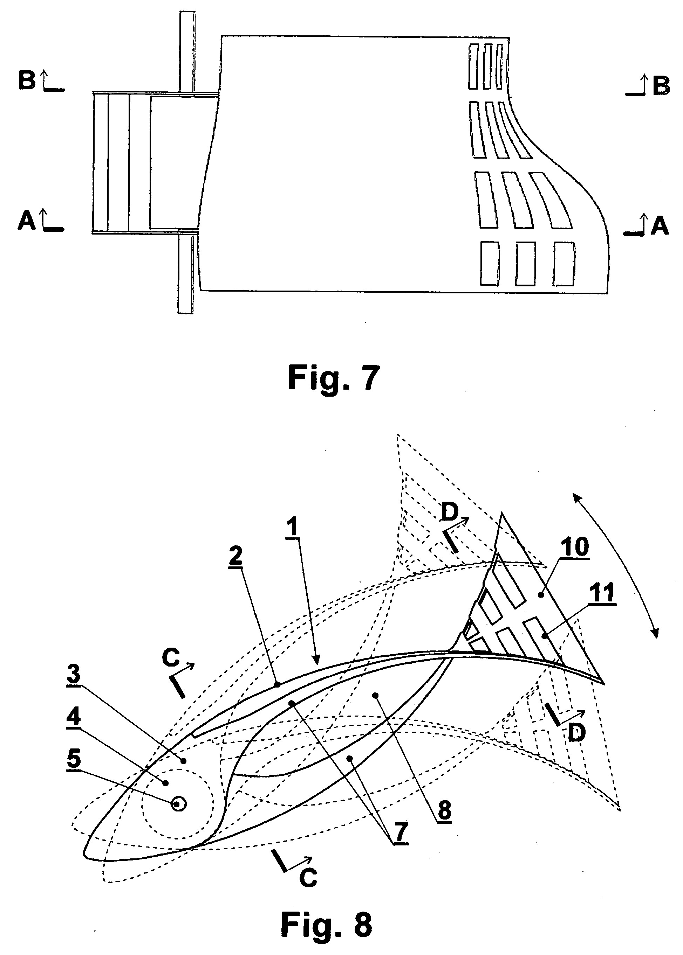

Fig. 7 - photovoltaic wing in the second embodiment in a top view;
Fig. 8 - photovoltaic wing in the second embodiment in a side view;

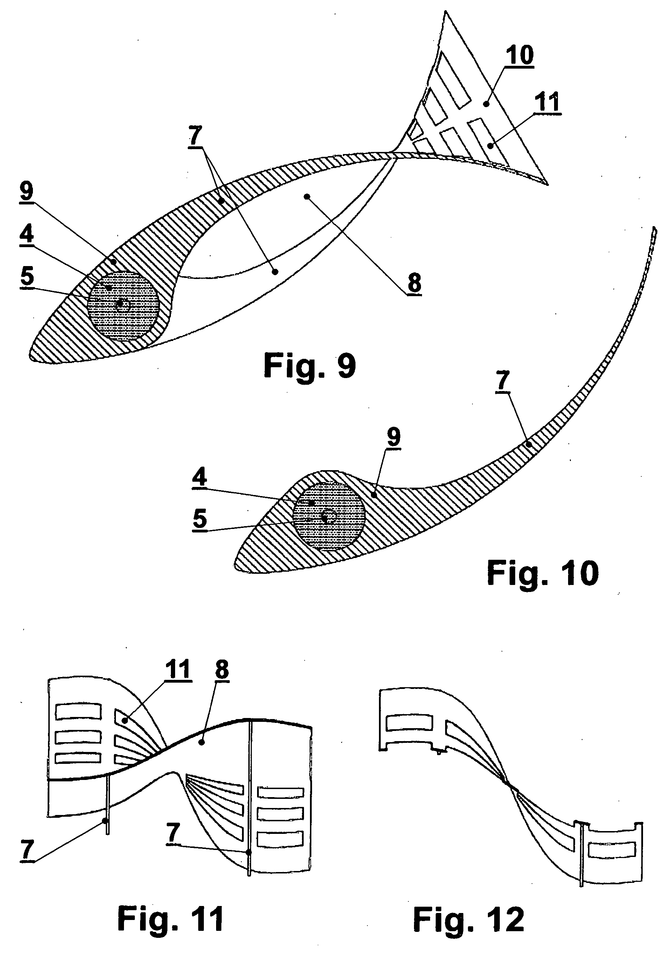

Fig. 9 - photovoltaic wing in the second embodiment in vertical section along line A-A on Fig. 7;
Fig. 10 - photovoltaic wing in the second embodiment in vertical section along line B-B on Fig. 7;
Fig. 11 - photovoltaic wing in the second embodiment in vertical section along line C-C on Fig. 8;
Fig. 12 - photovoltaic wing in the second embodiment in vertical section along line D-D on Fig. 8;
Fig. 13 - example of photovoltaic wing set arrangement on the roof of the building in a side view;
Fig. 14 - example of photovoltaic wing set arrangement on the roof of the building in a top view.

Photovoltaic wing of the invention has the form of pendulous wing **1**, pendulously mounted at one end on basis not shown in figures and set obliquely to the horizontal.

In the first embodiment pendulous wing **1** has in vertical section shape similar to wedge sinusoidal double-twisted in the middle and extending downwards, and its upper surface has shape similar to rectangle and is covered with photovoltaic structure **2** in a form of foil. Lower, extending part **3** of the pendulous wing **1** passes into a horizontal cylindrical form **4**, with the bolts **5** placed in its axis, which pendulously mounted wing **1** into the basis. Inside the cylinder **4** there is the return mechanism not shown in figures and electricity generating mechanism also not shown in figures. Both mechanisms, as known, are not subject of the invention.

At the end of extending part **3** the pendulous wing **1** has a counterweight element **6** stabilizing its initial position.

The pendulous wing **1** at rest is axially inclined at an angle of 35°. This inclination can be changed in the range of 20 - 40°, depending on the angle of the sunlight, using a mechanism not shown in the figure.

The pendulous wing **1** in the second embodiment has skeletal structure composed of two longitudinal ribs **7** and the upper layer **8**, where longitudinal ribs **7** has in vertical section shape similar to wedge of the ellipse outline extending downwards, while one of the ribs has convexity facing upwards and the other downwards.
Between lower, extending ends **9** of the ribs there is the cylinder **4** mounted to the basis with the bolts **5**.
Upper layer **8** is sinusoidal double-twisted in the middle and its upper surface is covered with photovoltaic structure **2** in a form of foil.
Inside the cylinder **4** there is the electricity generating mechanism not shown in figures and return springy mechanism also not shown in figures. Both mechanisms, as known, are not subject of the invention.
The pendulous wing **1** at rest is axially inclined at an angle of 35°. This inclination can be changed in the range of 20 - 40°, depending on the angle of the sunlight, using a mechanism not shown in the figure.
The pendulous wing **1** at its free end **10** has a holes **11** to reduce weight of the wing and improving its aerodynamics.

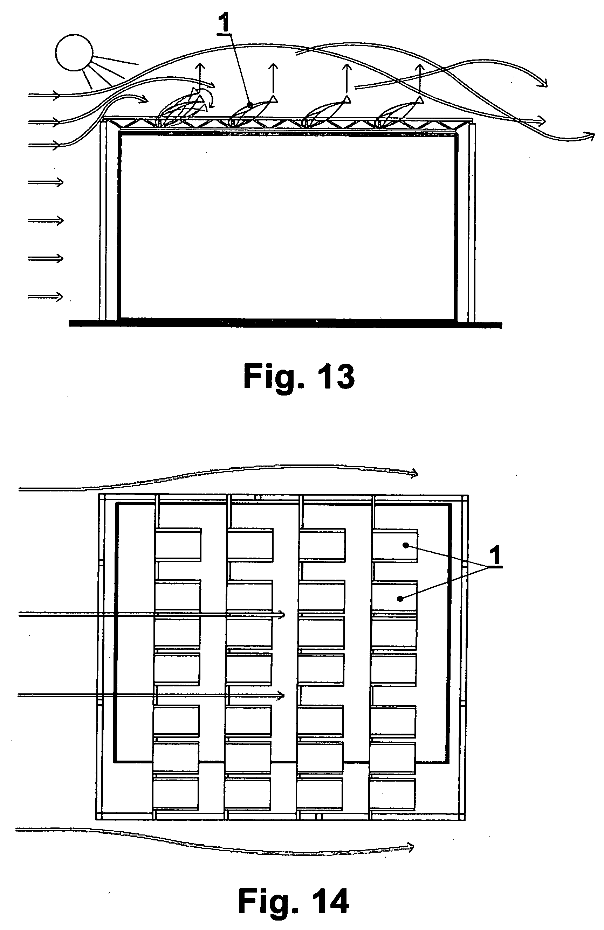

Photovoltaic wings **1** of the invention may be arranged on a supporting construction on the roof of the building, placing them in the direction that enabling optimal use of the sunlight energy, as shown at figure 13 and 14. During the day, they generate electricity, and accumulate it in the known manner. At the same time, winds of varying intensity around the clock causing pendulous motion of the wings **1**, and the mechanical energy of that motion is processed in generators into electricity.

### The list of indications

- 1: - The pendulous wing
- 2: - The photovoltaic structure
- 3: - The lower extended part
- 4: - The cylinder
- 5: - The bolt
- 6: - The counterweight element
- 7: - The longitudinal rib
- 8: - The upper layer
- 9: - The extended lower end of the rib
- 10: - The free end of the wing
- 11: - The hole

## Claims

1. Photovoltaic wing having a surface with a rectangle-like form, covered with a photovoltaic structure and utilizing harmonic pendulous movement caused by the wind, having the form of a pendulous wing (1) designed to be inclined axially at 20° to 45° to the horizon, when at rest, the photovoltaic wing is connected with a return mechanism and an electric power generating mechanism, wherein the photovoltaic wing in longitudinal section is in form similar to a wedge sinusoidally double-twisted in the middle part and widening downwards, and its lower widened part (3) is pendulously mounted on the base.

2. Wing according claim 1, **characterized in, that** in the state of rest it is inclined preferably at 30° to 35° to the level.

3. The wing, according to the claim 2, **characterized in, that** its extended lower part (3) passes into the cylindrical form (4).

4. The wing, according to the claim 2, **characterized in, that** there is a return mechanism inside its extended lower part (3).

5. The wing, according to the claim 2, **characterized in, that** there is an electricity generating mechanism inside its extended lower part (3).

6. The wing, according to the claim 2, **characterized in, that** its extended lower part (3) is linked to a counterweight element (6).

7. The wing, according to the claim 4, **characterized in, that** the return mechanism is a spring mechanism.

8. Wing according to Claim 1, **characterized in, that** it has a skeletal design provided with two longitudinal ribs (7) and a covering (8) which is sinusoidally double-twisted in the middle part, wherein between the lower ends (9) of the ribs (7) the cylinder (4) is provided.

9. The wing, according to the claim 1 or 8, **characterized in, that** there are holes (11) on its free end (10).

10. The wing, according to the claim 1, **characterized in, that** it is made of high strength and low specific gravity materials.

## Patentansprüche

1. Der Photovoltaik-Flügel mit einer rechteckigen, mit Photovoltaik-Struktur bedeckten Fläche, der durch Windwirkung hervorgerufene Pendelbewegungen ausnützt, in Form von einem zur Achsneigung von 20° bis zu 45° zum Horizont projektierten Pendelflügel, in der Ruhelage ist der Photovoltaik-Flügel mit einem Klappmechanismus und einem stromerzeugenden Mechanismus verbunden, wo der Photovoltaik-Flügel in seinem länglichen Teil einem im Mittelteil sinusförmig zweifach gedrehten und sich nach unten ausdehnenden Keil ähnelt und sein breiterer Unterteil (3) an dem Gestell pendelweise montiert ist.

2. Der Flügel gemäß Anspruch 1, **dadurch gekennzeichnet, dass** er in der Ruhelage am besten von 30° bis zu 35° zur Horizontalen geneigt ist.

3. Der Flügel gemäß Anspruch 2, **dadurch gekennzeichnet, dass** sein breiterer Unterteil (3) in eine zylindrische Form (4) übergeht.

4. Der Flügel gemäß Anspruch 2, **dadurch gekennzeichnet, dass** sich im Innern seines breiteren Unterteils (3) der Klappmechanismus befindet.

5. Der Flügel gemäß Anspruch 2, **dadurch gekennzeichnet, dass** sich im Innern seines breiteren Unterteils (3) der stromerzeugende Mechanismus befindet.

6. Der Flügel gemäß Anspruch 2, **dadurch gekennzeichnet, dass** sein breiterer Unterteil (3) mit einem egengewichtelement verbunden ist.

7. Der Flügel gemäß Anspruch 4, **dadurch gekennzeichnet, dass** der Klappmechanismus ein Federmechanismus ist.

8. Der Flügel gemäß Anspruch 1, **dadurch gekennzeichnet, dass** er eine Skelettkonstruktion aus zwei Längsrippen (7) und einem Gehäuse (8) hat, die im Mittelteil zweifach gedreht ist, wo zwischen den unteren Enden (9) der Rippen (7) sich ein Zylinder (4) befindet.

9. Der Flügel gemäß Anspruch 1 oder 8, **dadurch gekennzeichnet, dass** in seinem freien Ende (10) sich Öffnungen (11) befinden.

10. Der Flügel gemäß Anspruch 1, **dadurch gekennzeichnet, dass** es mit hoher Festigkeit und niedrigem spezifischem Gewicht Materialien hergestellt ist.

## Revendications

1. L'aile photovoltaïque à surface rectangulaire couverte d'une structure photovoltaïque et utilisant les mouvements harmoniques pendulaires provoqués par la force du vent, sous forme d'une aile pendulaire étudiée à l'inclinaison axiale de 20° à 45° par rapport à l'horizon, dans l'état de repos l'aile photovoltaïque est liée avec un mécanisme pliant et un mécanisme générateur du courant, où l'aile photovoltaïque dans sa partie longitudinale ressemble à une cale sinusoïdalement doublement torsadée en partie centrale et s'élargissant vers le bas, et sa partie inférieure plus large (3) est montée de façon pendulaire sur la base.

2. L'aile selon la revendication 1 se **caractérise par le fait qu'**à l'état de repos est inclinée de préférence de 30° à 35° par rapport à l'horizon

3. L'aile selon la revendication 2 se **caractérise par le fait que** sa partie inférieure plus large (3) passe à la forme cylindrique (4).

4. L'aile selon la revendication 2 se **caractérise par le fait qu'**à l'intérieur de sa partie inférieure plus large (3) se trouve un mécanisme pliant.

5. L'aile selon la revendication 2 se **caractérise par le fait qu'**à l'intérieur de sa partie inférieure plus large (3) se trouve un mécanisme générateur du courant.

6. L'aile selon la revendication 2 se **caractérise par le fait que** sa partie inférieure plus large (3) est liée à un élément pondérateur.

7. L'aile selon la revendication 4 se **caractérise par le fait que** le mécanisme pliant est un mécanisme à ressort.

8. L'aile selon la revendication 1 se **caractérise par le fait qu'**elle a une ossature de deux nervures longitudinales (7) et de l'écran (8) qui est doublement torsadé dans la partie centrale, où entre les bouts inférieurs (9) des nervures (7) se trouve un cylindre (4).

9. L'aile selon la revendication 1 ou 8 se **caractérise par le fait que** dans son bout libre (10) se trouvent des trous (11).

10. L'aile selon la revendication 1 se **caractérise par le fait qu'**elle est exécutée des matériaux à grande force et à petit poids spécifique.
